(19) Europäisches Patentamt / European Patent Office / Office européen des brevets

(11) **EP 1 775 593 A1**

(12) **EUROPEAN PATENT APPLICATION**
published in accordance with Art. 158(3) EPC

(43) Date of publication:
**18.04.2007 Bulletin 2007/16**

(51) Int Cl.:
**G01P 5/20** (2006.01)

(21) Application number: **04747730.2**

(22) Date of filing: **13.07.2004**

(86) International application number:
**PCT/JP2004/010266**

(87) International publication number:
**WO 2006/006250 (19.01.2006 Gazette 2006/03)**

(84) Designated Contracting States:
**AT BE BG CH CY CZ DE DK EE ES FI FR GB GR HU IE IT LI LU MC NL PL PT RO SE SI SK TR**

(71) Applicant: **THE TOKYO ELECTRIC POWER COMPANY INCORPORATED**
**Tokyo 100-8560 (JP)**

(72) Inventors:
• **MORI, Michitsugu,**
**The Tokyo Elect. Power Comp.Inc.**
**Chiyoda-ku, Tokyo 100-8560 (JP)**

• **TEZUKA, Hideaki,**
**The Tokyo Elect. Power Comp.Inc.**
**Chiyoda-ku, Tokyo 100-8560 (JP)**

(74) Representative: **Siegert, Georg**
**Hoffmann - Eitle**
**Patent- und Rechtsanwälte**
**Arabellastrasse 4**
**81925 München (DE)**

(54) **FLUID FLOW MEASUREMENT SYSTEM, FLUID FLOW MEASUREMENT METHOD, AND COMPUTER PROGRAM**

(57) A fluid flow measurement system comprising a sheet-shaped light emitting device that emits a sheet-shaped light into a flow field of a fluid containing particles; a CMOS image sensor that captures an image on a sheet emitted by the sheet-shaped light-emitting device and that can convert the image signal into digital data; timing control means that puts the sheet-shaped light-emitting device and the CMOS image sensor into synchronized operation; and image processing means that compares and analyzes the luminance pattern distributions of images on the sheet captured by the CMOS images sensor at various times, for measuring the movement direction and movement amount of the particles. As a need arises, a transmission line is used or the imaging interval is shortened by using two CMOS image sensors and a beam splitter. This makes it possible to use PIV even under a condition more rigorous than conventional, for example, under a condition where the amount of light is insufficient, the system is in a radiation environment, or the flow speed is high.

Fig. 1

EP 1 775 593 A1

**Description**

Field of the Invention

The present invention relates to a fluid flow measuring technique for accurately and precisely measuring a fluid flow in a complex flow field and more particularly to the technique relevant to the flow measuring of the fluid, which measures the flow velocity and direction of the fluid flowing in an enclosed space.

Background Art

(Current technique and needs)

In a nuclear power plant, thermal power plant, chemical plant, and the like, because of reasons outlined below, highly precise and accurate measurements are desired for the fluid flow (velocity and direction of the fluid, etc.) in a complex fluid field. Specifically, accurate measurements are extremely important in high-accuracy prediction of plant behavior, plant diagnosis, plant performance evaluation, and improvement of equipment.

However, in an actual plant, it is very difficult to measure fluid flow especially under a severe environment where conditions are different from the outside because measurements are based on the fluid flow measurement conditions that have a complex flow.

In addition, not only are the atmospheres in the nuclear reactor pressure vessel and the heat exchanger of the thermal power generation severe, but it is also difficult to access such vessels.

In recent years, research into visualization techniques in the thermal hydraulics field has advanced. Particle Image Velocimetry (hereinafter referred to as "PIV") is being developed to accurately and precisely measure the fluid flow in the complicated flow field.

PIV is a method to radiate a laser beam or the like on micro particles (tracers) interfused into a fluid to successively acquire the scattered light therefrom as images and obtain a moving distance of the particle assemblage to measure fluid velocity in a two-dimensional surface. PIV has an excellent spatial resolution and is suitable for measuring the fluid flow in a complex fluid field.

By dually using "PIV" and "image guide bundling optical fiber" (hereinafter referred to as "optical fiber image guide"), described below, flow measurements of fluid can be expected even in an enclosed space whose environment differs from that of the outside such as that of a nuclear reactor pressure vessel.

(A discussion of PTV)

Particle Tracking Velocimetry (abbreviated as "PTV") is a method for tracking tracers and digitally processing each particle image using a computer, and PTV is included as a kind of PIV in this present document.

(Optical fiber image guide)

The above-mentioned optical fiber image guide is applied as a fiber scope that directly transmits images, and a medical endoscope has already been developed, for example. The optical fiber image guide is flexible and plays an important role as a means of transmitting images for observation means.

The optical fiber image guide, which was developed for medical use, is now finding applications in industrial fields and in internal inspections of aircraft engines, observations of short pipes, and nuclear reactor cores.

Long-distance image transfer was difficult for optical fiber because of light loss, however, long-distance image transfer has become possible by the development of an optical fiber that has low light loss. Accordingly, it is in the spotlight as a new maintenance inspection means for large-scale plant facilities from a remote location.

(Current technique and its limitations)

PIV has the following problems.

A first problem is that an interface is necessary between a CCD camera and arithmetic unit for image processing. Specifically, an A/D converter (frame grabber board) that digitizes analog signals from the CCD camera must be interposed. Consequently, a bottleneck is generated in shortening the transmission rate, and processing time, and the like.

A second problem is the simultaneous phosphorescence of all pixels and simultaneous read-out of all pixels are preferable, however, timing control of the shutter is difficult in satisfying these conditions, so countermeasures such as setting a longer exposure time are required. As exposure times become longer, continuous shooting at extremely short intervals becomes more difficult.

A third problem is that when using PIV, two images shifted in time are required, however, since there is always dead time in the camera as a startup time immediately after photographing, continuous shooting at extremely short intervals was difficult.

(Attempts to solve the problems)

The first and second problems can be solved to some extent if time and spatial resolutions are compatible in PIV For example, these problems have been solved through improved performances of CCD cameras and peripheral devices. As technique to improve shortcomings relating to time resolution, Japanese Patent Application Laid-open No. 2004-20385 is provided.

The third problem is based on a major premise that a minimum time interval of continuous shooting cannot be less than the dead time of the camera. To overcome this problem a high performance camera having an extremely short dead time can be used, if needed.

(New problems)

If shooting time is reduced, the amount of light is reduced as well. As a result, a dark current (noise) is increased. To prevent this phenomenon, there are methods such as increasing the amount of light from the light source for photographing, using a CCD camera with an even higher level of sensitivity, and cooling the CCD camera to an extreme degree such as by applying Peltier cooling. However, either of these methods require new equipment which increases costs.

Not limited to the above examples, there are requirements to utilize PIV under severer conditions than at present, such as in an environment where the amount of light is insufficient, radiation is present, and fluid velocity is fast.

(Problems to be Solved by the Present Invention)

The problem to be solved by the present invention is to provide a measurement technique using PIV that can be applied even under severer conditions than the one at present.

An object of the present invention according to claims 1 to 5 is to provide a measurement system using PIV that can be applied even under severer conditions than the one at present.

An object of the present invention according to claims 6 to 8 is to provide an algorithm used for the PIV measurement system that can be applied even under severer conditions than the one at present.

Disclosure of the Invention

To solve the above-mentioned problems, technical means described each claim are provided.

(Claim 1)

The invention according to claim 1 is related to a fluid flow measurement system comprising a sheet-shaped light emitting device for emitting a light in a sheet-shape into a flow field of fluid containing particle assemblage; a CMOS image sensor that photographs images on the sheet radiated from the sheet-shaped light emitting device and digitally converts the image signals; a timing control means that synchronizes the sheet-shaped light emitting device and CMOS image sensor; and an image processing means that compares and analyzes an luminance pattern distribution of the image on the sheet at a plurality of times photographed by the CMOS image sensor to measure a moving direction and a distance of the particle assemblage.

(Description of terminology)

"Sheet-shaped light emitting device" is a laser beam oscillation equipment, a halogen light emitting device, LED, or the like. In addition to a device capable of intermittently emitting light like a pulse laser beam, a light source of continuous light is also acceptable.

"CMOS image sensor" is an image sensor that uses a complementary metal-oxide semiconductor (CMOS). This is an acronym for "CMOS sensor". Because a CMOS sensor functions under electric power of approximately 10 % of the CCD sensor and can be operated under a single low voltage, it can be integrated with the peripheral circuits. Consequently, the CMOS image sensor according to the present invention is integrally formed with a circuit that digitally converts the photographed two-dimensional particle images.

(Functions and effects)

Initially, the sheet-shaped light emitting device emits the sheet-shaped light into the fluid flow field. The CMOS image sensor photographs the two-dimensional image on the sheet. The timing control means synchronizes the sheet-shaped light emitting device and CMOS image sensor. Next, image processing means compares and analyzes the luminance pattern distribution of the particle image at a plurality of times photographed by the CMOS image sensor to measure the moving direction and distance of the particle assemblage.

Since the CMOS image sensor forms the photographed image signal in such a way that it can be subjected to the digital conversion, an A/D converter (frame grabber board), which is required when using the CCD camera for digitizing the analog image signal becomes unnecessary. That contributes to the shortening of transmission rates and processing times.

Because the light emitted for the image to be photographed can control the exposure time at the CMOS image sensor, a light emitting device, which is required when the CCD camera, is used for closely controlling the emission of light according to the exposure time is unnecessary.

Accordingly, the light emitting device for continuous light can be employed. When employing a non-storage CMOS image sensor, photography is possible even with low output of the light emitting device since the dark current (noise) is small even at low intensity light. Further, since the CMOS sensor can employ a shutter function, there is no longer a need for a pulse laser that required detailed control, such as the light emitting device that emits light only when photographing.

(Claim 2)

The invention according to claim 2 relates to the fluid flow measurement system comprising a sheet-shaped light emitting device for emitting a sheet-shaped light into a flow field of fluid containing particle assemblage; an image transmission cable that transmits optical data of the image on the sheet emitted from the sheet-shaped light emitting device as light; a CMOS image sensor that photographs optical data of the image on the sheet transmitted as light and digitally converts the image signal; a timing control means that synchronizes the sheet-shaped light emitting device and the CMOS image sensor; and image processing means that compares and analyzes an luminance pattern distribution of the image on the sheet at a plurality of times photographed by the CMOS image sensor to measure a moving direction and distance of the particle assemblage.

The difference from the invention of claim 1 is that a transmission cable capable of physically transferring image data is provided between the subject (the image on the emitted sheet) and camera (the CMOS image sensor). Specifically, this is used when the subject and camera are physically separated.

(Description of terminology)

An image transmission cable is formed by bundling linear core material capable of transmitting intensity information and is also called an image guide. For example, one image guide is formed by bundling approximately 30,000 cores. As for an image guide that is radiation-proof, there is a type of optical fiber image guide made of fluorine-doped silica.

When images are transmitted through the image transmission cable, fiber noise is generated, however, the image processing means is provided with a filtering processing means for removing fiber noise.

(Claim 3)

The invention according to claim 3 sets limits on the fluid flow measurement system according to either of claim 1 or claim 2.

Specifically, the sheet-shaped light emitting device relates to the fluid flow measurement system and is further provided with a frequency changing means that changes a frequency of the light emitted by the sheet-shaped light emitting device for enhancing a contrast between the particle assemblage and background in the image photographed by the CMOS image sensor.

(Functions and effects)

When the contrast between the particle assemblage and background is weak in the image photographed by the CMOS image sensor, the luminance pattern distribution of the particle image by the image processing means sometimes cannot be obtained. In such cases, the frequency of the light emitted by the sheet-shaped light emitting device is changed so that the frequency changing means can enhance the contrast between the particle assemblage and background.

After changing the frequency, the image is photographed again by the CMOS image sensor, and the image processing means compares and analyzes the luminance pattern distribution of the particle image at a plurality of times photographed by the CMOS image sensor to measure a moving direction and distance of the particle assemblage.

Furthermore, if the contrast cannot be obtained between the particle assemblage and background even by resetting the frequency, it is acceptable to photograph after further resetting.

(Claim 4)

The invention according to claim 4 sets limits on the fluid flow measurement system according to either of claim 1 to claim 3.

Specifically, the invention relates to the fluid flow measurement system, further comprising a beam splitter in an optical system that transmits the image on the sheet that is a subject to be photographed by the CMOS image sensor, wherein the CMOS image sensor is a high-speed camera composed of first and second cameras adjusted so that optical data split by the beam splitter can be photographed, and the timing control means controls a starting point of full exposure time of the second camera to be earlier than an end of a full exposure time of the first camera for the first camera, the second camera and the sheet-shaped light emitting device.

(Description of terminology)

A beam splitter is an optical component that diverges light. There is a polarized beam splitter that is coated with a derivative multilayer film comprising functions to permeate P polarized light of the incident radiation and to reflect S polarized light to other directions. In the present invention, a half mirror and half prism are types of beam splitters.

Note that by using the beam splitter when adjusting the first and second cameras, the same area can be photographed, but, a calibration unit is necessary for calibrating the deviation in the two photography images. The calibration unit is provided with the image processing means.

(Functions and effects)

It is not possible to photograph at an interval shorter than the dead time for a single CMOS image sensor. The first and second cameras have dead times (t31, t32), respectively. However, a controller controls the starting point of the full exposure time (t22) of the second camera to be earlier than the end point of the full exposure time (t21) of the first camera. As a result, continuous shooting with shorter intervals than the dead time of the CMOS sensor becomes possible. Continuous shooting of images captures movements that conventionally could not be analyzed.

Note that because the same area is photographed by the first and second cameras, the amount of light of each camera is half, so adjustments (increases) of the amount of light are frequently required when employing the CCD camera. However, with the invention according to the present aspect, it is possible to photograph with low noise components even under the low light intensity because the first and second cameras are CMOS sensors, so the adjustments of the amount of light are easy. The Peltier cooling, necessary when using the CCD camera, is also not required.

(Claim 5)

The invention according to claim 5 relates to a method of controlling the fluid flow measurement system comprising a sheet-shaped light emitting device for emitting a sheet-shaped light into a flow field of fluid containing particle assemblage; a CMOS image sensor that photographs images on the sheet radiated from the sheet-shaped light emitting device and digitally converts the image signal; an image processing means that compares and analyzes the luminance pattern distribution of the image on the sheet at a plurality of times photographed by said CMOS image sensor to measure a moving direction and distance of the particle assemblage; and frequency changing means that changes the frequency for enhancing a contrast between the particle assemblage and background in the image photographed by the CMOS image sensor.

Specifically, this aspect relates to a fluid flow measurement method for measuring the moving direction and distance of particle assemblage using a timing control procedure for synchronizing the sheet-shaped light emitting device and CMOS image sensor; a contrast measurement procedure for measuring the contrast between the particle assemblage and background in the image photographed by the CMOS image sensor; contrast changing procedure for changing the frequency of light emitted by sheet-shaped light emitting device to enhance the contrast between the particle assemblage and background for the frequency changing means when the measured contrast does not reach a predetermined contrast; a second timing control procedure that synchronizes the sheet-shaped light emitting device and CMOS image sensor according to the sheet-shaped light of the changed frequency when the frequency of light is changed by the contrast changing procedure; and an image processing procedure for operating the image processing means using the changed frequency light.

(Claim 6)

The invention according to claim 6 relates to a control method of a fluid flow measurement system comprising, a sheet-shaped light emitting device for emitting a sheet-shaped light into a flow field of fluid containing particle assemblage; an image transmission cable that transmits optical data of the image on the sheet emitted from the sheet-shaped light emitting device in the form of light; a CMOS image sensor that photographs optical data of the image on the sheet that is transmitted in the form of light and digitally converts the image signal;
image processing means that compares and analyzes the luminance pattern distribution of the image on the sheet at a plurality of times photographed by the CMOS image sensor to measure the moving direction and distance of the particle assemblage;
frequency changing means that changes the frequency for enhancing the contrast between the particle assemblage and background from the image photographed by the CMOS image sensor; and a beam splitter in the optical system that transmits the image on the sheet to be photographed by the CMOS image sensor, to the CMOS image sensor, wherein the CMOS image sensor is a high-speed camera composed of first and second cameras adjusted so that optical data split by the beam splitter can be photographed, and further comprises a controller for controlling the high-speed camera and the sheet-shaped light emitting device.
In other words, the invention is a fluid flow measurement method for measuring the moving direction and distance of the particle assemblage using the timing control procedure for synchronizing the sheet-shaped light emitting device and CMOS image sensor;
the contrast measurement procedure for measuring each contrast between the particle assemblage and background of both images photographed by the first and second cameras;
the contrast changing procedure for changing the frequency of light emitted by the sheet-shaped light emitting device to enhance the contrast between the particle assemblage and background by the frequency changing means when at least one of the two measured contrasts does not reach a predetermined contrast; a second timing control procedure that synchronizes the sheet-shaped light emitting device for emitting the sheet-shaped light of the changed frequency and CMOS image sensor when the frequency of light is changed according to the contrast changing procedure; and an image processing procedure for operating the image processing means by using the changed frequency light.

(Claim 7)

The invention according to claim 7 is related to a control method program of the fluid flow measurement system comprising,
a sheet-shaped light emitting device for emitting a sheet-shaped light into a flow field of fluid containing particle assemblage; a CMOS image sensor that photographs images on the sheet radiated from the sheet-shaped light emitting device and digitally converts the image signal; image processing means, which compares and analyzes the luminance pattern distribution of the image on the sheet at a plurality of times photographed by the CMOS image sensor to measure the moving direction and distance of the particle assemblage; and
frequency changing means that changes the frequency to enhance the contrast between the particle assemblage and background in the image photographed by the CMOS image sensor.
The program is a computer program for measuring the moving direction and distance of the particle assemblage by executing,
the timing control procedure for synchronizing the sheet-shaped light emitting device and CMOS image sensor; the contrast measurement procedure for measuring the contrast between the particle assemblage and background in the image photographed by the CMOS image sensor; the contrast changing procedure for changing the frequency of light emitted by the sheet-shaped light emitting device to enhance the contrast between the particle assemblage and background by the frequency changing means when the measured contrast does not reach a predetermined contrast; the second timing control procedure that synchronizes the sheet-shaped light emitting device for emitting the sheet-shaped light of the changed frequency and CMOS image sensor when the frequency of light is changed according to the contrast changing procedure; and the image processing procedure for operating the image processing means by using the changed frequency light.

(Claim 8)

The invention according to claim 8 is related to a control method program of the fluid flow measurement system comprising,
a sheet-shaped light emitting device for emitting a sheet-shaped light into a flow field of fluid containing particle assemblage;
an image transmission cable that transmits optical data of the image on the sheet emitted from the sheet-shaped light emitting device in the form light; a CMOS image sensor that photographs optical data of the image on the sheet transmitted in the form of light and digitally converts of the image signal;

an image processing means that compares and analyzes the luminance pattern distribution of the image on the sheet at a plurality of times photographed by the CMOS image sensor to measure the moving direction and distance of the particle assemblage;

a frequency changing means that changes the frequency for emphasizing the contrast between the particle assemblage and background in the image photographed by the CMOS image sensor;, and a beam splitter in an optical system that transmits the image on the sheet to be photographed by the CMOS image sensor, to the CMOS image sensor, wherein the CMOS image sensor is a high-speed camera composed of first and second cameras, adjusted so that optical data split by the beam splitter can be photographed, and further comprising a controller for controlling the high-speed camera and the sheet-shaped light emitting device.

The program is a computer program for measuring the moving direction and distance of the particle assemblage by making the computer execute

the timing control procedure for synchronizing the sheet-shaped light emitting device and CMOS image sensor;
the contrast measurement procedure for measuring the contrast between the particle assemblage and background of both images photographed by the first and second cameras;

the contrast changing procedure for changing the frequency of light emitted by the sheet-shaped light emitting device to enhance the contrast between the particle assemblage and background by the frequency changing means when at least one of the two measured contrasts does not reach a predetermined contrast; second timing control procedure that synchronizes the sheet-shaped light emitting device by the changed sheet-shaped light and CMOS image sensor when the frequency of light is changed according to the contrast changing procedure, and the image processing procedure for operating the image processing means by using the changed light.

(Recording media and transmission means)

It is possible to provide the computer program according to claim 7 or claim 8 by storing it in a recording medium. Here, "recording medium" is one capable of supporting the program that cannot occupy space by itself, such as a flexible disk, hard disk, CD-ROM, MO (Magneto Optical disk), DVD-ROM, and PD.

It is possible to transmit the computer program from the computer where the program related to the present invention is stored through a communication line to other computers.

Brief Description of the Drawings

Fig. 1 is a schematic diagram showing the configuration of a first embodiment.
Fig.2 is a plan view of the installation of two high-speed cameras for one photographic region.
Fig.3 is a schematic diagram of a signal processing method for a controller that controls the high-speed camera and high-speed light emitting means.
Fig.4 is a schematic diagram of transmitting images using a transmission cable.
Fig.5 is a schematic diagram of a filtering processing of a non-linear model.
Fig.6 is a schematic diagram of a filtering processing of a non-linear model.

Best Mode for Carrying out the Invention

(Fig. 1)

The PIV measurement system according to the first embodiment measures a complex flow field under a radiation environment and is provided with laser beam oscillation equipment 11; a scanning optical system 13 for forming a laser sheet that radiates the laser beam oscillated from the laser beam oscillation equipment 11 to a flow field 14 in a sheet-shape; image photographing means 30 that captures photographic image data by photographing the two-dimensional particle trajectory image from a given area (measurement area 16) in the laser sheet 15; timing control means 20 that synchronizes the timing of photography; and image processing means 40 that processes the photographic image data.

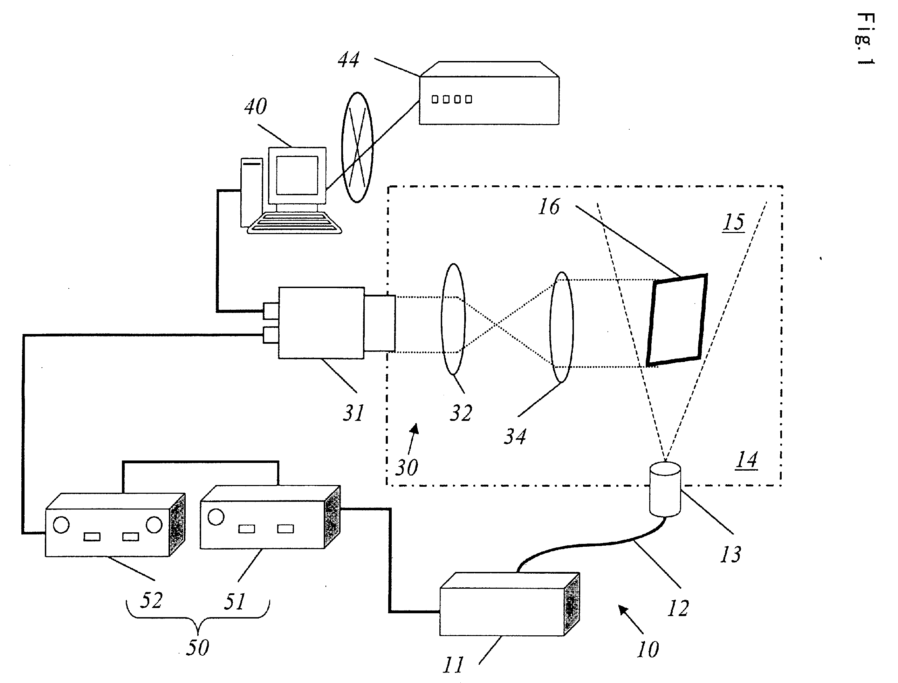

The laser beam oscillated from the laser oscillation equipment 11 is lead to the scanning optical system 13 for forming the laser sheet through a fiber 12 for transmitting light. The scanning optical system 13 projects the laser beam oscillated from the laser oscillation equipment 11 onto the flow field 14 of the fluid to form the laser sheet 15. The flow field 14 of the fluid is formed in an enclosed space that has a different environment from that of the outside world, shown surrounded by a dotted line in Fig. 1.

The laser sheet 15 formed by the scanning optical system 13 visualizes the flow field 14 of the fluid. In the present system 10, the laser sheet 15 is sheet-shaped to ensure the spatial resolution in the depth direction of the flow field 14. The image photographing means 30 is established to oppose the measurement range 16 of the laser sheet 15.

The image photographing means 30 is provided with an objective lens 34 that concentrates light reflected off the floating matter to the laser beam in the measurement area 16 in the laser sheet 15, and an area scan camera 31 that receives optical data concentrated by the objective lens 34 through a camera lens 32. Note that in this embodiment, the CMOS sensor is adopted as the area scan camera.

By adopting the CMOS sensor, it is possible to control the exposure time at the CMOS sensor, so the light emitting device for fine-control of the emission of light according to the exposure time is unnecessary, which was required when using a CCD camera. When employing a non-storage type as the CMOS sensor, it is possible to adopt the light emitting device of continuous light because there is less noise even under the low-light intensity, and to lower the specification required for the laser oscillation equipment 11 and its peripheral devices.

The timing control means 50 is composed of a timing scheduler 51 and a synchronizer 52.

While the laser oscillation equipment 11 oscillates at the timing of the timing scheduler 51, the area scan camera 31 is driven by synchronizing to the timing of oscillation by the synchronizer 52. Specifically, the timing control means 51 is configured to be driven in synchronization to the laser oscillation equipment 11 and the area scan camera 31 as an operating means.

Since the area scan camera 31 adopts the CMOS image sensor, it is possible to perform analog photography and to digitally process that information. An image frame, which is digitally-processed image signal, is image data processed by the image processing means 40 equipped with a computer that processes the image according to the PIV method.

Processed image data is transmitted through the communication network to another computer 44 and the like that requires the data. For example, this can be a computer installed at a control center of the plant remotely located from a nuclear power plant.

In the PIV measurement system described above, two particle images photographed by the area scan camera 31 at slightly different times, are regarded as the luminance pattern distribution and image processing in the image comparison analysis is conducted by the computer of the image processing means 40 to estimate the amount of movement of the particle assemblage. The particle image represents a distribution image of the particle assemblage at a certain time, which is diffusion-distributed in the fluid on the laser sheet 15, and is composed of pixels having digitized luminance. In the processing of the images by the image processing means 40, in a so-called PIV process, a limited measurement area 16 among each particle image is taken out to be subjected to the image processing.

Note that a frequency changing means capable of changing the frequency of the radiating light is provided in the laser oscillation equipment 11 to enhance the contrast between the particle assemblage and background in the image photographed by the area scan camera 31. If the contrast between the particle assemblage and background is weak, the luminance pattern distribution of the particle image by the image processing means sometimes cannot be obtained. In such cases, the frequency changing means changes the frequency of the light radiated by the light emitting device to enhance the contrast between the particle assemblage and background to photograph again.

Because the CMOS image sensor is employed for the area scan camera 31, it is possible to adopt the light emitting device of the continuous light, so the light emitting device no longer has to be a pulse laser requiring fine control such as radiating light when photographing. Consequently, the performance required for the light emitting device can be lowered and costs can also be reduced.

(Fig.2)

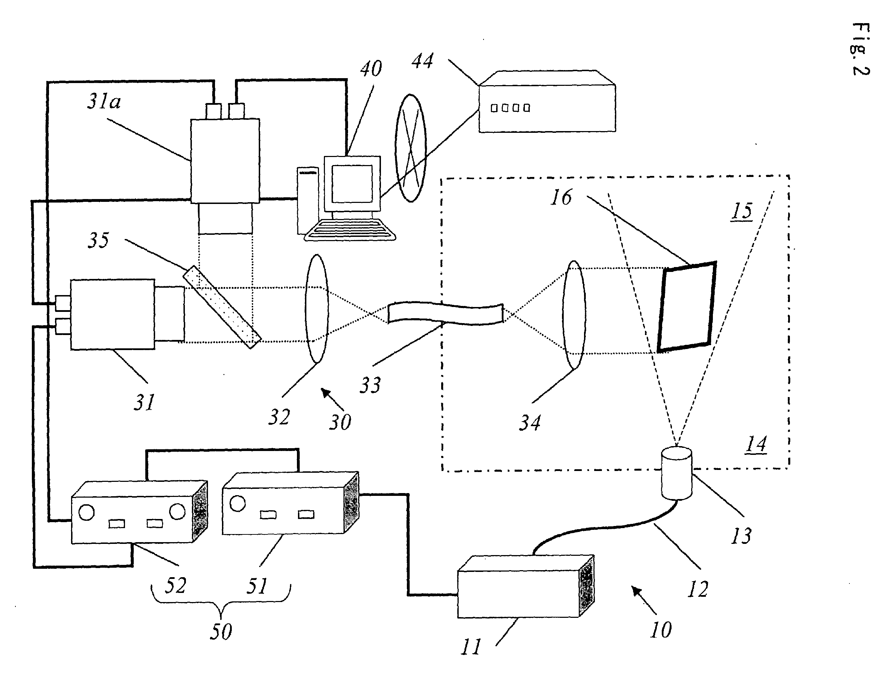

A second embodiment shown in Fig.2 shows a case where by using the image transmission means, the area scan camera 31 is installed separated from the flow field 14 of the fluid, when the area scan camera 31 cannot be installed at the flow field 14.

As a specific flow field 14, there is the flow field of fluid in the enclosed space such as a downcomer section of the nuclear reactor pressure vessel, core shroud, heat exchanger and steam generator of a thermal electric power generation plant.

In this embodiment, a transmission cable 33 is provided that transmits optical data converged by the objective lens 34 onto the camera lens 32. The transmission cable 33 is formed by bundling approximately 30,000 lines of linear core material that can transmit intensity information. As for the image guide having radiation proof performance, there is an optical fiber image guide made of fluorine-doped silica, which is a kind of the optical fiber image guide. When employing the transmission cable 33, there is a shortcoming in that fiber noise is generated. However, fiber noise can be overcome by the image processing means such as through background processing.

The present embodiment is provided with a beam splitter 35 between the camera lens 32 and CMOS image sensor. Here, the beam splitter is an optical component that diverges light and can be a half mirror and half prism.

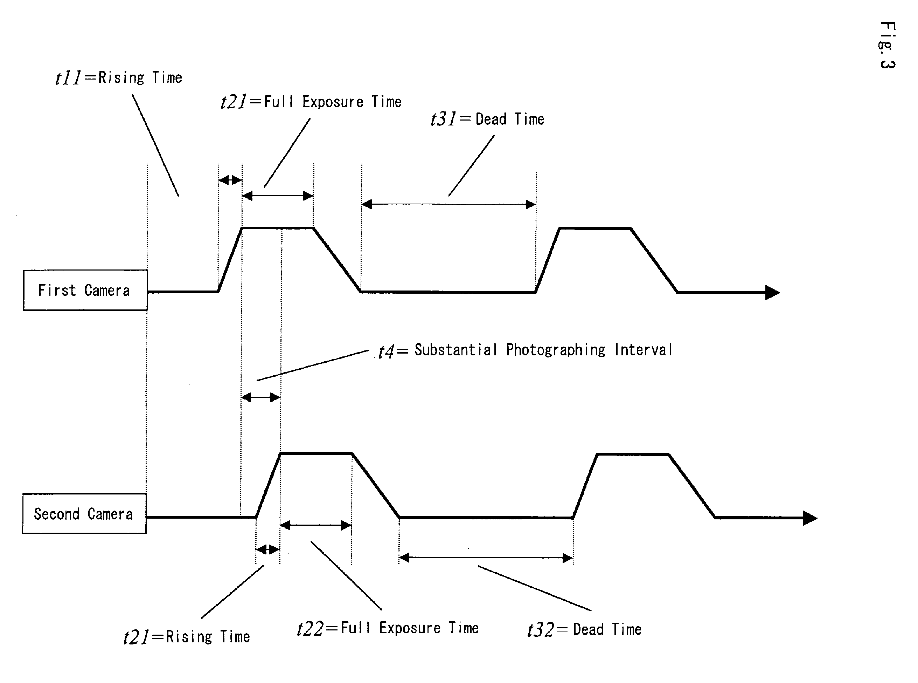

Further, the CMOS image sensor is a high-speed camera composed of a first camera 31 and second camera 31a adjusted to be able to photograph optical data diverged by the beam splitter 35. Timing control means 51 controls the first camera 31, second camera 31a, and laser oscillation equipment 11 as shown in Fig. 3.

(Fig. 3)

Up to approximately 20 $\mu$ s are necessary for full exposure at both the first and the second cameras (startup time t11, t21). A shutdown time and dead time (t31, t32) are necessary to be able to photograph again after the completion of the full exposure. Accordingly, continuous photographing with intervals shorter than the dead time is not possible when using only one camera. However, the timing control means 51 controls so that the starting point of the full exposure time (t22) of the second camera is earlier than the ending point of the full exposure time (t21) of the first camera, whereby a substantial photographing interval (t4) is shorter than the dead time (t31, t32).

Note that by using the beam splitter, the same area can be photographed by adjusting the first and second cameras. However, a calibration unit is necessary for calibrating the deviation in the photography image. The calibration unit is provided by the image processing means, however, since a widely known technique is employed for deviation calibration of a plurality of images, the details of which will be omitted.

(Fig. 4)

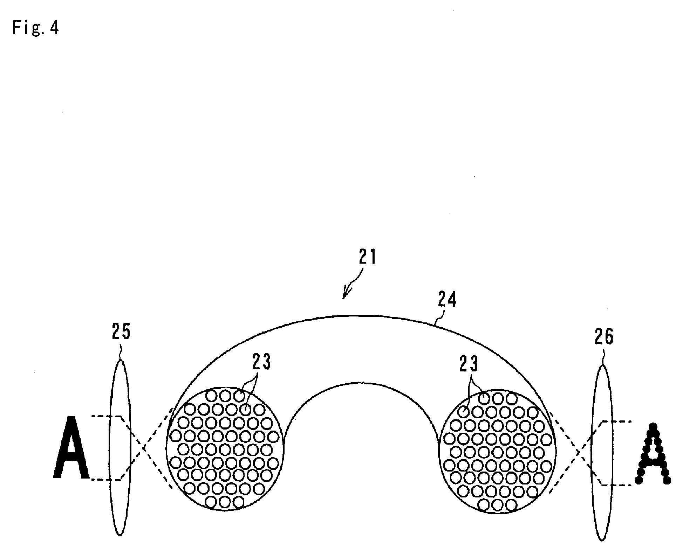

Fig. 4 is a model of photographed data transmitted using an actual optical fiber image guide (24).

In the optical fiber image guide (24), a plurality of optical fibers (23) is closely arranged in a hexagonal shape. Consequently, distortion (fiber noise) is generated in the image photographed through the objective lens (25), image guide (24), and camera lens (26).

Therefore, in order to remove the fiber noise in the particle image photographed through the image guide (24), two technique have been developed. They are background processing using a linear model and background processing using a nonlinear model.

The background processing using the linear model is suitable for cases in which the background processing and analysis of the fluid flow thereafter are separately conducted. On the other hand, background processing using the nonlinear model is suitable for cases in which continuous processing is required for the background processing and analysis of the fluid flow.

(Background processing by the nonlinear model)

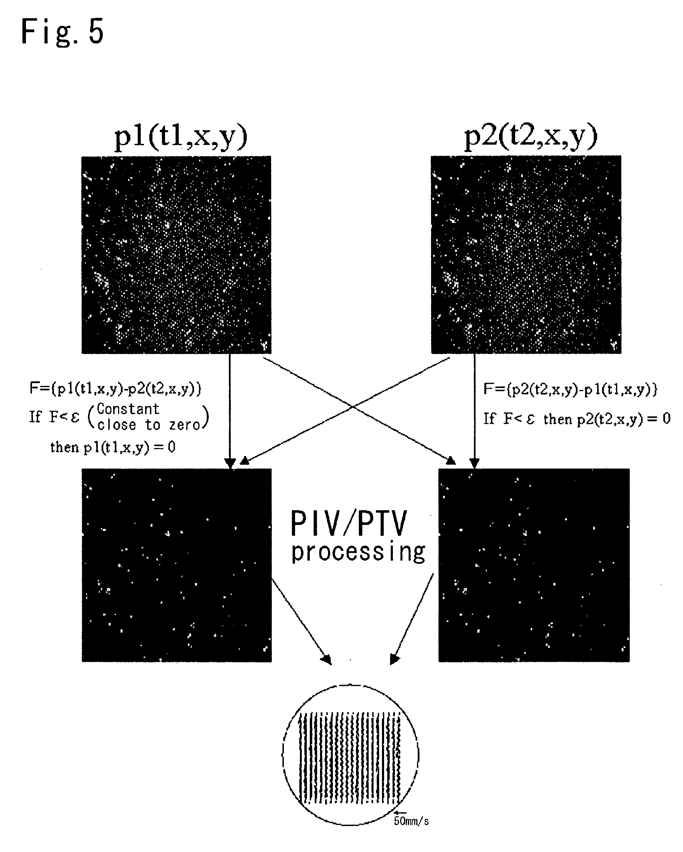

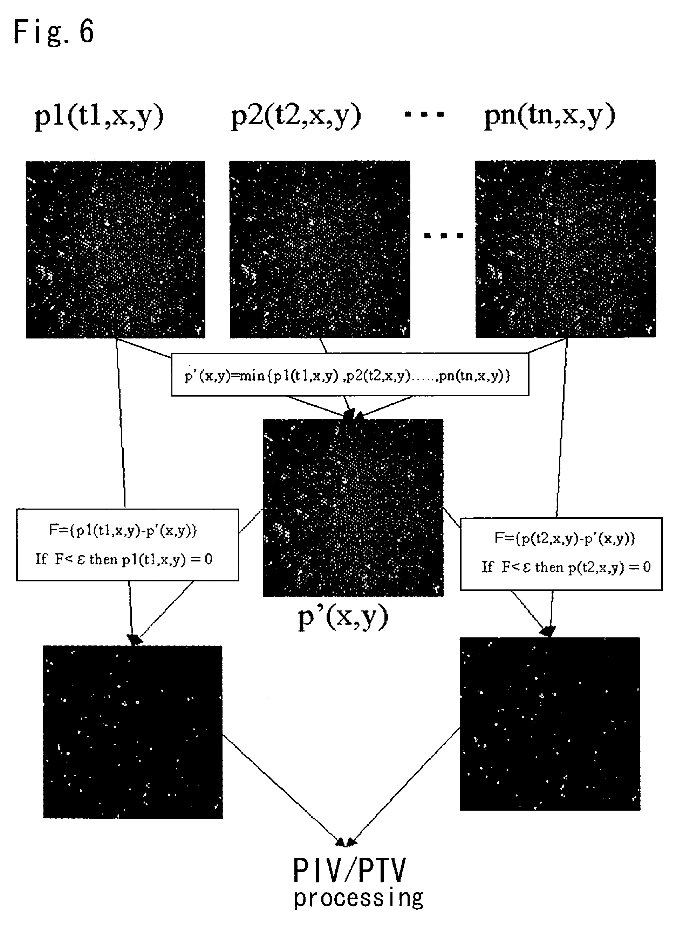

The background processing using the nonlinear model provides two kinds of technics: the background processing using two sheets of the image data and background processing using three and more sheets of the image data. Explanations are based on Figs. 5 and 6 below.

(Fig. 5)

Initially, the value of the luminance value p at time t is defined as p (t, x, y) for the pixel of certain coordinates (x, y).

The area scan camera captures a first image data at first time (t1) and a second image data at time (t2) which is different from the first time. The luminance value p1 at given coordinates (x, y) in the first image data is p1 (t1, x, y) and the luminance value p2 at given coordinates (x, y) in the second image data is p2 (t2, x, y). The luminance value has 256 gradations.

Firstly, the first background processing means subtracts the luminance value of the second image data from the luminance value of the first image data to process coordinates where the difference of both values is below a predetermined position as the background. The first image data so processed becomes the first background processing data. Specifically,

$$F = \{ p1\ (t1,\ x,\ y) - p2\ (t2,\ x,\ y)\}$$

$$IF\ F < 5\ then\ p1\ (t1,\ x,\ y) = 0\ \ldots\ldots\ (Equation\ 1)$$

are executed. In other words, coordinates whose luminance value is less than 8 in the first image data are regarded as background.

Next, the second background processing means subtracts the luminance value of the first image data from the luminance value of the second image data to process the coordinates whose difference of both values is below a predetermined position in the second image data as the background. The second image data so processed becomes the second background processing data. In the same way,

$$F = \{ p2 (t2, x, y) - p1 (t1, x, y)\}$$
$$\text{IF } F < 5 \text{ then } p2 (t2, x, y) = 0 \ \ldots\ldots. \ (\text{Equation 2})$$

are executed. In other words, the coordinates whose luminance value is less than 5 in the second image data are also regarded as background. Furthermore, the predetermined value = 5 is empirically found in the 256 gradations, therefore, it is not always a best value under various conditions.

After executing the background processing, image processing is conducted on the luminance pattern distribution of the particle image using the first and second background processing data.

Based on the background processing, the number of photographic images required for removing fiber noise can be greatly reduced and lower the burden of calculation and shorten that time because two sheets of image data can be used to remove noise in the image data.

(Fig. 6)

A more detailed explanation will be given to other background processing method with reference to Fig. 6, which shows a different method from the one shown in Fig. 5.

Using the area scan camera, image data at the time, whose frequency is n or more (n > 2), is obtained, and they are p1, p2, ...., pn, respectively.

Then, all n image data is superimposed to extract a minimum luminance for each coordinates and prepare a minimum luminance image data p' formed by the minimum luminance. Specifically,

$$P' = \min \{p1(t1, x, y), p2 (t2, x, y), \ldots., pn (tn, x, y)\} \ \ldots.. \ (\text{Equation 3})$$

is calculated. In other words, the coordinates with the smallest luminance values are extracted.

Next, the minimum luminance image data is subtracted from the luminance value of each photographed image data. That is,

$$F = \{p1( t1, x, y) - p' (x, y)\}$$

$$\text{IF } F < 5 \text{ then } p1 (t1, x, y) = 0$$
$$F = \{p2( t2, x, y) - p' (x, y)\}$$
$$\text{IF } F < 5 \text{ then } p2 (t2, x, y) = 0$$
$$\ldots\ldots\ldots\ldots\ldots\ldots\ldots\ldots\ldots\ldots\ldots$$
$$F = \{pn( tn, x, y) - p' (x, y)\}$$
$$\text{IF } F < 5 \text{ then } pn (tn, x, y) = 0 \ \ldots.. \ (\text{Equation 4})$$

are executed. Thereby, coordinates whose luminance value is less than 5 in each image data are regarded as the background. In addition, here, the predetermined value = 5 is empirically found in the 256 gradations as well, therefore, it is not always a best value under various conditions.

In addition, the number of image data which the area scan camera captures is at least 3 or more. However, the reduction of the burden of calculation and the shortening of time are not possible with too many numbers. Further, there is a shortcoming in that as the number of the photography image increases, it becomes susceptible to noise. Then, empirically from about 6 to 10 is appropriate and "8" is frequently employed. However, the best value sometimes changes according to the performance of the computer to be used, photographing conditions, and properties and conditions of the photography object.

After executing the background processing like the above, image processing regarding the luminance pattern of the particle image is conducted using at least two of each image data. The image processing will be described below.

In the background processing method described in Fig. 5, when an image component that can be recognized as the particle in the first image data, and other particles moved from other places in the second image data, are superimposed on the relevant image component, the relevant image component is sometimes treated as the background. In such cases, there is a drawback in that both particles in the first image data and the other particles in the second image data are not traced by the particle distribution data processing means.

While compensating the drawback of the first background processing method, the second background processing method described with reference to Fig. 6 greatly reduces the number of photographic images necessary for removing fiber noise and achieves a reduction of the burden for calculation and shortened time.

(Background processing by the linear model)

The background processing by the linear model is a technique for removing the luminance pattern of the fiber array of the transmission cable by processing the particle trajectory image photographed by the CMOS sensor through the transmission cable, obtaining an addition average value of luminance value of each pixel of the chronologically obtained particle trajectory image, and subtracting the added average value from the luminance value of each particle trajectory image.

An image processing algorithm for removing the luminance pattern of the transmission cable array will be described below.

When the particle trajectory image of the measurement data is x, the luminance pattern (signal component) of the transmission cable array being s, and luminance pattern (noise component) of the particle assemblage being n, the particle trajectory image x is represented as:

$$X = s + n \ldots\ldots\ldots(Equation\ 5)$$

In other words, it is considered that as for the particle trajectory image x of the measurement data, the noise (luminance pattern of the particle) is superimposed on the signal (luminance pattern of the optical fiber array). The luminance pattern removal processing of the optical fiber array by calculating the addition average value is a useful method when the signal-to-noise ratio is small and there is not a big difference in the constitutive frequency of signal and noise and when repetitive measurement under the same condition is allowable.

When time sequence element is applied to equation 5, it can be expressed like equation 6.

$$xi\ (k) = si\ (k) + ni\ (k) \ldots\ldots(Equation\ 6)$$

Here, i = the i-th sheet of particle image
k: the k-th pixel luminance value in the i-th sheet of particle image

When the number of the captured particle trajectory image is M in the photographing of the particle trajectory image, the addition average x (k) for M sheets of the particle trajectory image can be expressed like equation 7.

$$x(k) = \frac{1}{M} \sum_{i=1}^{M} x^i(k)$$

$$= \frac{1}{M} \sum_{i=1}^{M} s^i(k) + \frac{1}{M} \sum_{i=1}^{M} n^i(k)$$

……. (Equation 7)

The same pattern would appear in the continuous particle trajectory image under the same experimental condition (light transmitting system and light receiving system) for the luminance pattern s of the transmission cable array, so M times luminance value is obtained by the addition of M times, and when an addition average processing is conducted for averaging it (dividing by M), the luminance value remains the same. In other words, it is possible to obtain images reflected only in the optical fiber array where there are no particles through the addition average processing, and when subtracting the luminance value (luminance pattern) of the optical fiber array for each pixel from the particle trajectory image, where the optical fiber array exists, the luminance pattern of the optical fiber array can be removed.

Through this background processing, the background intensity of the obtained image is almost equal over the entire screen. Therefore, it is a useful means not only for the correlation calculation processing, but also for the binary processing mentioned below.

(Selection of background processing method)

A description was given relating to the two background processing methods of the nonlinear model and the background processing by the linear model, and in each case there are advantages and disadvantages. Therefore, with regard to which to select, it is possible to conduct automated selection by accumulating the performance of the PIV measurement system and conditions of the properties of the fluid, and to output an appropriate number of photographic images in the second method using the nonlinear model for reference.

(Image processing)

The image processing is conducted according to the procedure as follows.

(Binary and expansion image processing)

As pretreatment for discriminating the particle from the particle trajectory image, conduct the binary and expansion image processing. The trajectory image of the particle floating in the fluid is affected by the clad of the optical fiber 25, and recorded not as a continuous image but as intermittent images. When the intermittent particle image is binary-processed, the component whose information is lost due to the clad, is not recovered. In order to make these divided trajectory image of the particle be recognized as the movement trajectory of the same particle, the expansion image processing is conducted.

With the expansion image processing, if a remarkable pixel exists, all surrounding pixels are converted from 0 to 255. (eight-connection expansion processing) In the present algorithm, by repeating the expansion processing twice, the divided intermittent particle image is recovered as the continuous trajectory image.

(Labeling and detection of particle image location)

Since there are a plurality (multiple) of particle images in a sheet of the particle trajectory image, in order to make each to be recognized as the separate particle, conduct labeling as follows. In other words, apply the same number to each connected pixel and apply another number to a different connected component. Giving a number to each area like this is referred to "labeling." The particle image discriminated by the labeling is returned to the original image and the center of the location is calculated. The center of coordinates can be obtained by the particle image centroid, below. When the centroid coordinates are $X_0$, $Y_0$, coordinates of each point being i, j, and the luminance value of predetermined coordinates being I,

$$X_0 = \{ \Sigma i \cdot I(I,j) \} / \{ \Sigma \ I(I,j) \}$$
$$Y_0 = \{ \Sigma j \cdot I(I,j) \} / \{ \Sigma \ I(I,j) \} \ \dots \dots \ (\text{Equation 8})$$

are obtained.

(Calculation of integer distance of movement by correlation calculation)

Since the center location of the particle trajectory image is detected by the particle image pretreatment from the background processing to detection of the particle image location, the distance of movement of individual particle is obtained by the cross-correlation method.

In addition, the particle trajectory image obtained by digitizing the two dimensional particle trajectory image at the first time photographed by the area scan camera of the PIV system is defined as "reference image", a limited rectangular area in the "reference image" being defined as "reference window image", the particle trajectory image obtained by digitizing the two dimensional particle trajectory image at the second time, which is different from the first time by infinitesimal time being defined as "search image", and a limited rectangular area in the "search image" being defined as "search window image".

The moving distance estimation of the particle by the cross-correlation method is known to have a correlation value R represented by the following formula between the "search window image" and "reference window image", and it is a method for obtaining the moving distance of each particle between the two images by obtaining the degree of similarity of the luminance pattern of the individual particle based on the correlation value R to perform comparison.

Coordinates after the movement are X' and Y', and relative locations of the search window image and reference window image are $\xi$ and $\eta$.

$$R(X',Y',\xi,\eta)$$
$$= \frac{\sum_{0}^{n-1} \sum_{0}^{m-1} (I_1(X'+i,Y'+j) - I_1^{ave})^2 \cdot (I_2(X'+i+\xi,Y'+j+\eta) - I_2^{ave})}{\sum_{0}^{n-1} \sum_{0}^{m-1} (I_1(X'+i,Y'+j) - I_1^{ave})^2 \cdot \sqrt{\sum_{0}^{n-1} \sum_{0}^{m-1} (I_2(X'+i+\xi,Y'+j+\eta) - I_2^{ave})^2}}$$

$$\dots \dots \dots (\text{Equation 9})$$

$$I_1^{ave} = \frac{\sum_{0}^{n-1} \sum_{0}^{m-1} I_1(X'+i,Y'+j)}{n \cdot m} , I_2^{ave} = \frac{\sum_{0}^{n-1} \sum_{0}^{m-1} I_2(X'+i+\xi,Y'+j+\eta)}{n \cdot m}$$

$$\dots \dots \dots (\text{Equation 10})$$

As shown by equations 9 and 10, the correlation value R varies from -1 to 1 by dividing by root-mean-square (normalizing) of the luminance value of the search window image and reference window image. When the correlation value R is 1, two images perfectly match meaning that the larger the correlation value, the larger the degree of similarity there is between the window images.

The locations $\xi$ and $\eta$, where the correlation value R becomes maximum, correspond to moving distances $\Delta X'$ and $\Delta Y'$ of the particle in the image. The size n x m of the reference window image and relative position with the reference window image are determined by the predictable minimum and maximum velocities.

(Calculation of sub pixel moving distance)

Since an integer value of the moving distance of particle images can be obtained through "Calculation of integer moving distance by correlation calculation", the sub pixel moving distance is estimated by the Gaussian peak-fit using neighborhood three points of the peak of the correlation factor. It is independently calculated regarding the x and y directions.

(Calibration)

According to the above procedure, the moving distance of the particle trajectory image is obtained in units of pixels, therefore, it is converted into the moving distance in the real space by the calibration.

**Claims**

**1.** A fluid flow measurement system comprising:

a sheet-shaped light emitting device for emitting a sheet-shaped light into a flow field of fluid containing particle assemblage;
a CMOS image sensor for photographing images on the sheet radiated from the sheet-shaped light emitting device and digitally converting the image signal;
a timing control means for synchronizing said sheet-shaped light emitting device and CMOS image sensor; and
an image processing means for comparing and analyzing the luminance pattern distribution of the image on the sheet at a plurality of times photographed by said CMOS image sensor to measure a moving direction and distance of the particle assemblage.

**2.** A fluid flow measurement system comprising:

a sheet-shaped light emitting device for emitting a sheet-shaped light into a flow field of fluid containing particle assemblage;
an image transmission cable for transmitting optical data of the image on the sheet emitted from the sheet-shaped light emitting device in the form of light;
a CMOS image sensor for photographing optical data of the image on the sheet transmitted in the form of light and digitally converting the image signal;
a timing control means for synchronizing said sheet-shaped light emitting device and the CMOS image sensor; and
an image processing means for comparing and analyzing the luminance pattern distribution of the image on the sheet at a plurality of times photographed by said CMOS image sensor to measure a moving direction and distance of the particle assemblage.

**3.** The fluid flow measurement system according to either of claims 1 or 2; wherein
said sheet-shaped light emitting device is provided a frequency changing means that can change the frequency of the sheet-shaped light emitted by the sheet-shaped light emitting device to enhance the contrast between the particle assemblage and background in the image photographed by the CMOS image sensor.

**4.** The fluid flow measurement system according to either of claims 1 to 3, comprising:

a beam splitter in an optical system that transmits the image on the sheet to be photographed by said CMOS image sensor, to the CMOS image sensor; wherein
said CMOS image sensor is a high-speed camera composed of a first and second cameras adjusted so that optical data split by the beam splitter is photographed; and
said timing control means controls the first and second cameras and said sheet-shaped light emitting device so that a starting point of the full exposure time of the second camera is earlier than an ending point of the full exposure time of the first camera.

5. A control method of a fluid flow measurement system comprising:

a sheet-shaped light emitting device for emitting a sheet-shaped light into a flow field of fluid containing particle assemblage;

a CMOS image sensor for photographing images on the sheet radiated from the sheet-shaped light emitting device and digitally converting the image signal;

an image processing means for comparing and analyzing the luminance pattern distribution of the image on the sheet at a plurality of times, photographed by said CMOS image sensor to measure a moving direction and distance of the particle assemblage; and

a frequency changing means that can change frequency for enhancing the contrast between the particle assemblage and background in the image photographed by said CMOS image sensor; wherein

the control method measures the moving direction and distance of the particle assemblage by using;

a timing control procedure for synchronizing the sheet-shaped light emitting device and CMOS image sensor;

a contrast measurement procedure for measuring the contrast between the particle assemblage and background in the image photographed by the CMOS image sensor;

a contrast changing procedure for changing the frequency of light emitted by the sheet-shaped light emitting device to enhance the contrast between the particle assemblage and background by said frequency changing means when the measured contrast does not reach a predetermined contrast;

a second timing control procedure that synchronizes the sheet-shaped light emitting device for emitting the sheet-shaped light of the changed frequency and CMOS image sensor when the frequency of light is changed according to the contrast changing procedure; and

an image processing procedure for operating said image processing means by using the changed frequency light.

6. A control method of the fluid flow measurement system comprising:

a sheet-shaped light emitting device for emitting a sheet-shaped light into a flow field of fluid containing particle assemblage;

an image transmission cable for transmitting optical data of the image on the sheet emitted from the sheet-shaped light emitting device in the form of light;

a CMOS image sensor for photographing optical data of the image on the sheet transmitted in the form of light and digitally converting the image signal;

an image processing means for comparing and analyzing the luminance pattern distribution of the image on the sheet at a plurality of times, photographed by said CMOS image sensor to measure the moving direction and distance of the particle assemblage;

a frequency changing means for changing the frequency for enhancing the contrast between the particle assemblage and background from the image photographed by said CMOS image sensor;

a beam splitter in an optical system that transmits the image on the sheet to be photographed by said CMOS image sensor, to the CMOS image sensor; wherein

the CMOS image sensor is a high-speed camera composed of a first and second cameras that photograph optical data split by the beam splitter;

further comprising a controller for controlling the high-speed cameras and the sheet-shaped light emitting device; wherein

the control method measures the moving direction and distance of the particle assemblage by using;

a timing control procedure for synchronizing the light emitting device and CMOS image sensor;

a contrast measurement procedure for measuring each contrast between the particle assemblage and background of both images photographed by the first and second cameras;

a contrast changing procedure for changing the frequency of light emitted by the sheet-shaped light emitting device to enhance the contrast between the particle assemblage and background by said frequency changing means when at least one of the two measured contrasts does not reach a predetermined contrast;

a second timing control procedure that synchronizes the sheet-shaped light emitting device for emitting the changed sheet-shaped light of the changed frequency and CMOS image sensor when the frequency of light is changed according to the contrast changing procedure; and

an image processing procedure for operating said image processing means by using the changed frequency light.

7. A computer program for control method of the fluid flow measurement system comprising:

a sheet-shaped light emitting device for emitting a sheet-shaped light into a flow field of fluid containing particle assemblage;

a CMOS image sensor for photographing images on the sheet radiated from the sheet-shaped light emitting device and digitally converts the image signal;

an image processing means for comparing and analyzing the luminance pattern distribution of the image on the sheet at a plurality of times, photographed by said CMOS image sensor to measure the moving direction and distance of the particle assemblage; and

a frequency changing means for changing the frequency for enhancing the contrast between the particle assemblage and background in the image photographed by said CMOS image sensor; wherein

the program computes the moving direction and distance of the particle assemblage by executing;

a timing control procedure for synchronizing the sheet-shaped light emitting device and CMOS image sensor;

a contrast measurement procedure for measuring the contrast between the particle assemblage and background in the image photographed by the CMOS image sensor;

a contrast changing procedure for changing the frequency of light emitted by the sheet-shaped light emitting device to enhance the contrast between the particle assemblage and background by said frequency changing means when the measured contrast does not reach a predetermined contrast;

a second timing control procedure that synchronizes the sheet-shaped light emitting device for emitting the sheet-shaped light of the changed frequency and CMOS image sensor when the frequency of light is changed according to the contrast changing procedure; and

an image processing procedure for operating said image processing means by using the changed frequency light.

**8.** A computer program for control method of the fluid flow measurement system comprising:

a sheet-shaped light emitting device for emitting a sheet-shaped light into a flow field of fluid containing particle assemblage;

an image transmission cable for transmitting optical data of the image on the sheet emitted from the sheet-shaped light emitting device in the form of light;

a CMOS image sensor for photographing optical data of the image on the sheet transmitted in the form of light and digitally converting the image signal;

an image processing means for comparing and analyzing the luminance pattern distribution of the image on the sheet at a plurality of times, photographed by said CMOS image sensor to measure the moving direction and distance of the particle assemblage;

a frequency changing means for changing the frequency for enhancing the contrast between the particle assemblage and background in the image photographed by said CMOS image sensor;

a beam splitter in an optical system that transmits the image on the sheet to be photographed by said CMOS image sensor, to the CMOS image sensor, and

the CMOS image sensor is a high-speed camera composed of a first and second cameras that photograph optical data split by the beam splitter;

further comprising a controller for controlling the high-speed cameras and the sheet-shaped light emitting device; wherein

the program computes the moving direction and distance of the particle assemblage by executing;

a timing control procedure for synchronizing the light emitting device and CMOS image sensor;

a contrast measurement procedure for measuring each contrast between the particle assemblage and background regarding both images photographed by the first and second cameras;

a contrast changing procedure for changing the frequency of light emitted by the sheet-shaped light device to enhance the contrast between the particle assemblage and background by said frequency changing means when at least one of the two measured contrasts does not reach a predetermined contrast;

a second timing control procedure that synchronizes the sheet-shaped light emitting device for emitting the sheet-shaped light of the changed frequency and CMOS image sensor when the frequency of light is changed according to the contrast changing procedure; and

an image processing procedure for operating said image processing means by using the changed frequency light.

Fig.1

Fig. 2

Fig. 3

Fig. 4

# Fig. 5

p1(t1,x,y)                    p2(t2,x,y)

F={p1(t1,x,y)-p2(t2,x,y)}              F={p2(t2,x,y)-p1(t1,x,y)}

If F<ε $\left(\begin{smallmatrix} \text{Constant} \\ \text{close to zero} \end{smallmatrix}\right)$              If F<ε then p2(t2,x,y) = 0

then p1(t1,x,y) = 0

## PIV/PTV
## processing

50mm/s

# Fig. 6

p1(t1,x,y)     p2(t2,x,y)     • • •     pn(tn,x,y)

p'(x,y)=min{p1(t1,x,y) ,p2(t2,x,y)......,pn(tn,x,y)}

p'(x,y)

F={p1(t1,x,y)-p'(x,y)}

If F< ε then p1(t1,x,y) = 0

F={p(t2,x,y)-p'(x,y)}

If F< ε then p(t2,x,y) = 0

## PIV/PTV
processing

**INTERNATIONAL SEARCH REPORT**

| International application No. |
| --- |
| PCT/JP2004/010266 |

A. CLASSIFICATION OF SUBJECT MATTER
   Int.Cl⁷ G01P5/20

According to International Patent Classification (IPC) or to both national classification and IPC

B. FIELDS SEARCHED

Minimum documentation searched (classification system followed by classification symbols)
   Int.Cl⁷ G01P5/20

Documentation searched other than minimum documentation to the extent that such documents are included in the fields searched

| Jitsuyo Shinan Koho | 1922–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 2002-22759 A (The Tokyo Electric Power Co., Inc.),<br>23 January, 2002 (23.01.02),<br>Full text; all drawings<br>(Family: none) | 1-4<br>5-8 |
| Y<br>A | JP 2004-177312 A (Japan Science and Technology Agency),<br>24 June, 2004 (24.06.04),<br>Par. No. [0020]<br>(Family: none) | 1-4<br>5-8 |
| Y<br>A | JP 2004-96497 A (Mitsubishi Heavy Industries, Ltd.),<br>25 March, 2004 (25.03.04),<br>Par. Nos. [0002] to [0019]<br>(Family: none) | 1-4<br>5-8 |

☒ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>16 August, 2004 (16.08.04) | Date of mailing of the international search report<br>31 August, 2004 (31.08.04) |
| --- | --- |
| Name and mailing address of the ISA/<br>Japanese Patent Office | Authorized officer |
| Facsimile No. | Telephone No. |

Form PCT/ISA/210 (second sheet) (January 2004)

| | INTERNATIONAL SEARCH REPORT | International application No. |
|---|---|---|
| | | PCT/JP2004/010266 |

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 7-35764 A   (Takasago Thermal Engineering Co.,<br>Ltd.),<br>07 February, 1995 (07.02.95),<br>Par. No. [0025]<br>(Family: none) | 3<br>5-8 |
| Y<br>A | JP 4-361162 A   (Kabushiki Kaisha Onosokuki),<br>14 December, 1992 (14.12.92),<br>Par. No. [0013]; Fig. 1<br>(Family: none) | 4<br>5-8 |
| Y<br>A | JP 11-211743 A   (Kabushiki Kaisha Onosokuki),<br>06 August, 1999 (06.08.99),<br>Full text; all drawings<br>(Family: none) | 4<br>5-8 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004020385 A